# FASCICULE DE BREVET EUROPEEN

(11) **EP 3 536 034 B1**
(45) Date de publication et mention de la délivrance du brevet: **09.02.2022**
(21) Numéro de dépôt: 17794368.5
(22) Date de dépôt: 11.10.2017
(51) Int. Cl.: H04W 36/14, H04W 36/30, H04W 88/06, G10L 19/005

(54) **BASCULEMENT D'UNE PREMIÈRE INTERFACE DE COMMUNICATION VERS UNE DEUXIÈME POUR AMÉLIORER LA QUALITÉ PERÇUE DE LA COMMUNICATION**
UMSCHALTUNG VON EINER ERSTEN KOMMUNIKATIONSSCHNITTSTELLE ZU EINER ZWEITEN ZUR VERBESSERUNG DER WAHRGENOMMENEN KOMMUNIKATIONSQUALITÄT
SWITCHOVER FROM A FIRST COMMUNICATION INTERFACE TO A SECOND IN ORDER TO IMPROVE THE PERCEIVED QUALITY OF THE COMMUNICATION

(30) Priorité: 04.11.2016 FR 1660671
(43) Date de publication de la demande: 11.09.2019
(73) Titulaire: ORANGE, 92130 Issy-les-Moulineaux (FR)
(72) Inventeur: THOMAS, Jean-Philippe, 92326 Châtillon Cedex (FR)
(86) Numéro de dépôt international: PCT/FR2017/052792
(87) Numéro de publication internationale: WO 2018/083391

(56) Documents cités:
- EP-A1- 2 515 498
- WO-A1-2011/046439
- WO-A2-2015/148965
- US-A1- 2006 268 848
- US-A1- 2008 089 325
- US-A1- 2013 235 731
- US-B1- 9 420 510

## Description

La présente invention se rapporte au domaine général des télécommunications. Elle concerne plus particulièrement la gestion du basculement par un terminal en cours d'une communication entre plusieurs interfaces de communication d'un réseau de télécommunication.

Le réseau de communication permet d'accéder par exemple à des services de téléphonie ou de visiophonie sur réseau mobile.

Les services téléphoniques et visiophoniques sur réseaux mobiles 2G et 3G utilisent la technologie « circuit » dite CS (Circuit Switching).

Depuis quelques années, avec l'arrivée des réseaux mobiles 4G, des opérateurs commencent à déployer des architectures IMS (pour « IP Multimedia Subsystem » en anglais) permettant de fournir à leurs clients des services VoLTE/ViLTE (VxLTE pour « Voice services over Long Term Evolution »), c'est-à-dire des services vocaux et visiophoniques en technologie IP.

Par ailleurs, pour couvrir les manques de couverture radio 2G, 3G ou 4G, les opérateurs ont décidé de proposer à leurs clients des services VoWiFi/ViWiFi (VxWiFi), c'est-à-dire des services vocaux et visiophoniques utilisant également une architecture IMS mais dont le transport de la voix s'effectue sur la technologie radio Wi-Fi.

Les services VxLTE et VxWifi utilisent tous deux la technologie « paquet » dite PS, et le même cœur de réseau IMS.

Une communication vocale peut être établie indifféremment par l'intermédiaire d'un réseau d'accès Wi-Fi, 4G ou 2G/3G.

La technologie Wi-Fi n'est pas optimale pour le transport de la voix. Dans les cas de fortes contraintes ou sollicitations de la radio Wi-Fi, les tentatives de priorisation de la voix par rapport à d'autres données ne permettent pas de garder une bonne qualité du signal voix.

La liaison radio Wi-Fi peut être partagée par plusieurs points d'accès actifs dans une même zone géographique ce qui peut détériorer la qualité de la voix transportée. De même, pour un même point d'accès Wi-Fi, la bande de fréquence radio peut être partagée entre plusieurs équipements connectés à ce point et selon le trafic engendré par ces équipements, la qualité de la voix transportée peut être dégradée. De plus, la couverture Wi-Fi étant limitée en distance, la qualité de la communication peut aussi se dégrader lorsqu'on s'éloigne du point d'accès Wi-Fi. Des perturbations peuvent aussi être engendrées par des équipements à proximité mettant en oeuvre d'autres technologies radio utilisant les mêmes fréquences comme par exemple les technologies Bluetooth et NFC. Certains équipements domestiques comme les micro-ondes peuvent aussi générer des perturbations par l'utilisation de fréquences communes à la radio Wi-Fi.

Pour remédier à ce problème de qualité de la voix sur Wi-Fi, il existe des mécanismes de basculement entre un réseau Wi-Fi et un réseau 4G qui sont basées sur une analyse du niveau du signal radio ou encore sur la perte de paquets Wi-Fi. Certains constructeurs de terminaux interdisent complètement l'utilisation de la voix sur Wi-Fi (VoWifi) sur certains points d'accès jugés non compatibles.

Par exemple, la demande de brevet publiée US20090010222 décrit une méthode de basculement d'un réseau à un autre sur la base du niveau RSSI (pour « Received Signal Strength Indication » en anglais) mesurant la force du signal Wi-Fi.

Ce mécanisme ainsi que d'autres mécanismes de l'état de l'art se basent sur une analyse du réseau Wi-Fi et ne prennent pas en compte la qualité réellement perçue par l'utilisateur. Or la corrélation entre la qualité du réseau Wi-Fi et la qualité réellement perçue par l'utilisateur n'est pas immédiate.

Le document WO2011/046439A1 décrit un système de communication permettant le basculement d'un mode communication à un autre avant l'établissement d'une communication selon des critères de qualité des réseaux de communication ou de préférences utilisateurs.

Le document EP2515498A1 décrit la possibilité de changer de mode de communication selon des critères de qualité du signal vocal mesurée sur un équipement du réseau.

De même, le document WO2015/148965 se base sur l'évaluation de la performance des réseaux pour basculer d'un réseau à un autre.

Les critères de basculement de ces documents de l'état de l'art sont basés sur des caractéristiques du réseau ou sont mesurés sur des équipements du réseau et ne sont donc pas adaptés pour améliorer la qualité réellement percue par l'utilisateur, au plus près de la restitution du signal audio.

Il existe donc un besoin pour une solution permettant de prendre en compte la qualité perçue de la communication par un utilisateur pour basculer d'un réseau de communication à un autre ou plus généralement d'une interface de communication à une autre.

La présente invention vient améliorer la situation.

Elle propose à cet effet, un procédé de basculement d'une première interface de communication vers une deuxième interface de communication sur un terminal en cours de communication, tel que défini par la revendication 1.

La détection du nombre de commandes de mise en œuvre d'un processus de remplacement d'échantillons manquants permet de détecter des perturbations sur le signal audio reçu sans avoir à mesurer les caractéristiques de l'interface de communication par laquelle le signal reçu a transité et sans connaitre l'origine des perturbations.

Cette détection est simple à mettre en oeuvre et permet de mesurer, au plus près de la restitution du signal audio à l'utilisateur, si la qualité du signal est suffisante sur l'interface de communication utilisée.

Les différents modes particuliers de réalisation mentionnés ci-après peuvent être ajoutés indépendamment ou en combinaison les uns avec les autres, aux étapes du procédé de basculement défini ci-dessus, sans toute fois sortir du cadre de l'objet de l'invention tel que défini par les revendications.

Dans un mode de réalisation particulier, le seuil est défini par un nombre consécutif maximum de commandes.

Ainsi, les perturbations engendrant une série de trames manquantes (« burst » en anglais) sont détectées et sont révélatrices d'une perte de qualité sur le signal audio restitué. L'atteinte d'un tel seuil permet de basculer vers un autre réseau qui n'engendrera pas les mêmes perturbations.

Dans un autre mode de réalisation, le seuil est défini par un nombre de commandes maximum pendant un temps restreint.

L'atteinte d'un tel seuil révèle que le signal audlo reçu est fortement perturbé sur une période de temps courte et qu'un basculement vers un autre réseau de communication permettra d'éviter ce type de perturbation.

Dans des exemples de réalisation possibles, le basculement s'effectue entre deux interfaces de communication parmi les interfaces de communication de la liste suivante :
- Wi-Fi sur un premier point d'accès Wi-Fi et selon une première fréquence ;
- Wi-Fi sur un premier point d'accès Wi-Fi et selon une deuxième fréquence ;
- Wi-Fi sur un deuxième point d'accès Wi-Fi et selon une première fréquence ;
- Wi-Fi sur un deuxième point d'accès Wi-Fi et selon une deuxième fréquence ;
- 4G sur une première antenne 4G et selon une première fréquence ;
- 4G sur une première antenne 4G et selon une deuxième fréquence
- 4G sur une deuxième antenne 4G et selon une première fréquence ;
- 4G sur une deuxième antenne 4G et selon une deuxième fréquence ;
- 3G
- 2G.

Dans un mode de réalisation particulier, le basculement s'effectue selon un ordre prédéfini.

Ainsi, si un premier basculement d'interface ne suffit pas à résoudre le problème de qualité de signal audio et que le nombre de commandes de mise en œuvre du processus de remplacement est toujours important, alors un second basculement peut être mis en oeuvre. Une liste ordonnée de basculements possibles peut être définie par les constructeurs, opérateurs ou utilisateurs du terminal.

Dans une variante de réalisation, l'étape de détection s'effectue par prédiction selon une analyse statistique du flux de données décodées, de la communication en cours, d'un espace de stockage temporaire de données décodées du terminal.

Ainsi, selon un historique de basculements effectués en fonction du nombre de commandes de mise en oeuvre du processus de remplacement et du flux de données d'un espace de stockage temporaire de données audio décodées du terminal, l'analyse du flux de données permet de prédire le nombre de commandes du processus de remplacement et ainsi d'anticiper le basculement d'une interface à une autre.

La dégradation de qualité n'a donc pas eu le temps d'être restituée à l'utilisateur du terminal qui aura changé d'Interface de communication avant la perte de qualité.

La présente invention vise également un dispositif de communication apte un mettre en oeuvre un basculement d'une première interface de communication vers une deuxième interface de communication, tel que défini par la revendication 7.

L'invention vise aussi un terminal de communication comportant un dispositif tel que décrit précédemment.

Ce dispositif et ce terminal présentent les mêmes avantages que le procédé décrit précédemment, qu'ils mettent en œuvre.

L'invention vise un programme informatique comportant des instructions de code pour la mise en oeuvre des étapes du procédé de basculement tel que décrit, lorsque ces instructions sont exécutées par un processeur d'un dispositif tel que décrit précédemment.

Enfin I'invention se rapporte à un support de stockage, tel que défini par la revendication 10.

Dans un exemple, le processeur est intégré ou non au dispositif de communication, éventuellement amovible.

D'autres caractéristiques et avantages de I'invention apparaîtront plus clairement à la lecture de la description suivante, donnée uniquement à titre d'exemple non limitatif, et faite en référence aux dessins annexés, sur lesquels :
- la figure 1 illustre un système de communication comportant plusieurs interfaces de communication et adapté à la mise en oeuvre du procédé de basculement selon un mode de réalisation de l'invention ;
- la figure 2 illustre les principales étapes du procédé de basculement selon un mode de réalisation de l'invention ; et
- la figure 3 illustre une représentation matérielle d'un dispositif de basculement adapté à la mise en oeuvre du procédé de basculement selon un mode de réalisation de l'invention.

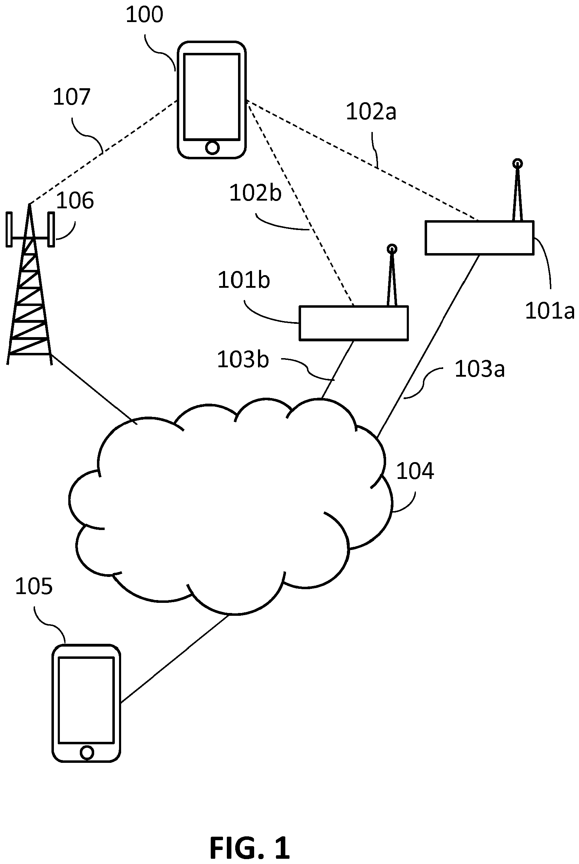

La **figure 1** illustre une architecture adaptée à la mise en oeuvre d'un procédé de basculement selon un mode de réalisation de l'invention. Elle représente un terminal 100 connecté à un point d'accès réseau 101a par l'intermédiaire d'une liaison sans fil 102a. Le terminal 100 est un terminal de communication de type téléphone Intelligent ou « smartphone » en anglais qui dispose d'au moins deux interfaces de communication lui permettant de se connecter de différentes manières à un réseau de communication 104.

Une première interface de communication du terminal 100 est par exemple une interface réseau Wi-Fi adaptée pour connecter le terminal au point d'accès 101a. Un tel point d'accès est par exemple un modem routeur ADSL (Asymetric Digital Subscriber line) offrant une interface de communication sans fil 102a de type Wi-Fi pouvant fonctionner à des fréquences différentes, par exemple à une première fréquence F1=2,4GHz ou à une deuxième fréquence F2=5GHz. Le point d'accès 101a comprend également une seconde interface de communication 103a, par exemple une interface de type ADSL vers un réseau de communication 104.

Un autre point d'accès 101b peut également coexister dans la même zone géographique que le point d'accès 101a. Ce point d'accès offre également une Interface de communication 102b de type Wi-Fi pouvant également fonctionner à des fréquences différentes, par exemple F1 ou F2.

Le point d'accès 101b comprend également une seconde interface de communication 103b, par exemple une interface de type ADSL vers un réseau de communication 104.

Le réseau 104 est par exemple un réseau de type IMS. Le terminal 100 peut ainsi établir une communication avec un second terminal 105 par l'intermédiaire d'une connexion Wi-Fi 102a ou 102b des modem-routeurs 101a ou 101b, du réseau ADSL 103a ou 103b et du réseau de communication 104. Une telle communication établie par l'intermédiaire du réseau d'accès Wi-Fi est une communication VoWifi.

Le terminal 100 dispose également d'une deuxième interface de communication. Cette interface est adaptée pour connecter le terminal au réseau de communication 104 par l'intermédiaire d'un second réseau d'accès 106. Le réseau d'accès 106 est par exemple un réseau cellulaire de type 2G, 3G ou 4G. Le terminal peut ainsi établir une communication avec le terminal 105 au travers d'une connexion 107 au réseau cellulaire 106 et du réseau de communication 104. Une telle communication peut être une communication VoLTE établie sur le réseau d'accès cellulaire 4G, le réseau 104 étant alors de type IMS.

Le réseau d'accès au réseau cellulaire se fait par l'intermédiaire d'une antenne (ou eNode) représentée ici en 106. Plusieurs antennes peuvent être disponibles pour le terminal, ce qui permet à celui-ci de basculer d'interface de communication en basculant d'une antenne à une autre.

La communication peut également se faire par l'intermédiaire d'un réseau d'accès cellulaire 2G ou 3G, le réseau 104 étant alors un réseau de type circuit.

Ainsi, le terminal 100 peut communiquer avec le terminal 105 via différents points d'accès et selon différentes interfaces de communication dont il dispose et telles que décrites ci-dessus.

De manière classique, l'interface de communication à utiliser pour établir une communication sur le terminal 100 peut dépendre de préférences configurées au préalable par l'opérateur de télécommunications ou par l'utilisateur du terminal. Par exemple, le terminal peut être configuré de façon à privilégier lorsque c'est possible, les communications VoWifi, dans le but de réduire les coûts et délester le trafic sur le réseau cellulaire.

Ce choix par défaut peut s'avérer, au cours de la communication comme insatisfaisant du point de vue de l'utilisateur parce que sa perception sonore de la communication n'est pas de bonne qualité.

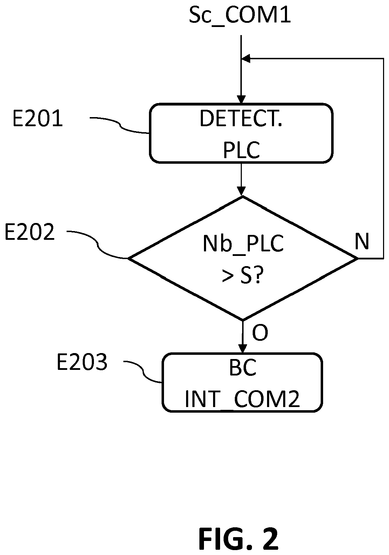

Ainsi, le terminal 100, selon un mode de réalisation de l'invention, met en oeuvre un procédé de basculement d'interface de communication selon les étapes décrites en référence à la figure 2. Ce basculement est basé sur un comptage de demandes de mise en oeuvre d'un processus de génération d'échantillons manquants lors du décodage de la communication en cours.

Ainsi, la **figure 2** illustre les principales étapes du procédé de basculement selon un mode de réalisation de l'invention.

A l'étape E201, le signal audio compressé ou codé de la communication en cours entre le terminal 100 et le terminal 105 tels qu'illustrés sur la figure 1, est reçu au décodeur audio du terminal 100 pour être décompressé ou décodé. Ce décodeur comporte un module de détection de manque de données dans une mémoire de réception des données compressées dans le flux de données à décompresser afin d'assurer un flux de données décodé continu à restituer à l'utilisateur.

Lorsque le module de détection détecte un manque de signal, il émet une requête ou commande de génération de signal manquant à un module de remplacement apte à mettre en oeuvre un processus de génération d'échantillons manquants (PLC pour « Packet Loss Concealment » en anglais).

A l'étape E202, le nombre de commande ainsi envoyée au module PLC est comptabilisé jusqu'à ce que ce nombre atteigne un seuil S. Ce seuil est par exemple défini par un nombre maximal de commandes successives.

Ce seuil peut être compris entre 8 et 12, par exemple 10. Bien évidemment ce nombre n'est pas limitatif, il peut être différent selon la tolérance de qualité que l'on souhaite obtenir pour l'utilisateur final.

Le seuil peut, dans un autre exemple, être défini par un nombre maximal de commandes pendant un temps réduit, par exemple en une seconde. Ce nombre, dans un exemple de réalisation peut être fixé à 20 pendant une durée d'une seconde.

Bien évidemment, ces seuils peuvent avoir d'autres valeurs selon la tolérance de dégradation que peut supporter l'utilisateur.

Lorsque le nombre de commandes dépasse le seuil ainsi défini à l'étape E202 (O en 202), alors l'étape E203 est mise en oeuvre par le basculement d'une interface de communication à une autre.

Ce basculement peut se faire par exemple de l'interface de communication Wi-Fi à une interface de communication de type 4G, ou bien 2G ou 3G.

Il peut se faire par le passage d'une fréquence à une autre sur un même point d'accès Wi-Fi.

Il peut également se faire entre deux points d'accès Wi-Fi de même fréquence ou de fréquence différente qui sont dans le même périmètre géographique de réception Wi-Fi du terminal.

Le basculement peut également se faire d'une interface de communication 4G vers une interface de communication Wi-Fi.

Enfin, le basculement peut aussi s'effectuer entre différentes antennes radio de l'interface de communication de type 4G ou Wi-Fi.

Ce procédé permet donc de prendre en compte la qualité audio réellement perçue par l'utilisateur puisque celui-ci perçoit les artefacts audio d'un nombre consécutifs importants de corrections de pertes de signal ou bien de corrections importantes pendant un temps limité.

La commande de génération d'échantillons de remplacement n'est pas due qu'à un défaut du réseau radio Wi-Fi ou 4G, elle peut être due à bien d'autres problèmes. Cela peut être des problèmes de latence d'arrivée des paquets de données compressées, des problèmes du réseau mais aussi des problèmes sur le terminal ou tout autre problème survenant dans la chaine de transmission de la partie audio de la communication.

Le terminal peut par exemple utiliser le même processeur que celui utilisé pour la VoWifi mais pour d'autres fonctions (par exemple un transfert de données vers un ordinateur via une interface USB). La qualité de la voix de la communication VoWifi peut être impactée par cette utilisation commune du processeur. Un basculement vers une autre interface de communication qui n'utilise pas le même processeur permettra d'éviter ce type de perturbation sur la qualité de la communication.

Quel que soit le problème dans cette chaine de transmission, un nombre important d'appel à la PLC est un signe de dégradation de la qualité de la restitution sonore pour l'utilisateur. Cette dégradation de la qualité est directement perçue par l'utilisateur.

Un changement d'interface de communication peut alors résoudre ce problème car la chaine de transmission est changée. Ce basculement peut ne pas apporter non plus la qualité suffisante à la communication en cours. Un autre basculement peut alors être prévu jusqu'à ce que le nombre d'appel à la PLC soit en dessous du seuil fixé.

Dans un mode de réalisation de l'invention, un ordre de basculement peut être configuré au préalable, soit par l'opérateur, soit par le constructeur du terminal, soit par l'utilisateur du terminal. Un ordre par défaut peut ainsi être enregistré en mémoire.

A titre illustratif, cet ordre peut être le suivant en partant d'une communication en cours sur un point d'accès Wi-Fi :
- Changement de fréquence sur le même point d'accès Wi-Fi ;
- Changement de point d'accès Wi-Fi avec la même fréquence ;
- Changement de point d'accès Wi-Fi avec une autre fréquence ;
- Changement vers une interface de communication 4G (LTE) ;
- Changement vers une interface de communication 3G ;
- Changement vers une interface de communication 2G.
Cet ordre peut bien évidemment être différent et peut inclure d'autres cas d'usages.

Dans une variante de réalisation, l'étape E201 de détection du nombre de commandes de mise en oeuvre de la PLC est effectuée par prédiction. Une analyse statistique du taux de remplissage et du débit de récupération des données décodées de la communication en cours, d'une mémoire de stockage temporaire des données décodées, est mise en oeuvre. Cette analyse permet de prévoir par anticipation que le processus PLC va être sollicité. Ainsi, l'analyse peut se baser sur des données d'historique enregistrées en mémoire qui donnent une corrélation entre l'appel à la PLC ou le nombre d'appel à la PLC et les caractéristiques de remplissage et de récupération des données audio à restituer, d'un module de stockage temporaire.

Cette détection par prédiction permet alors de basculer d'une Interface à une autre avant que les problèmes de qualité audio ne soient audibles par l'utilisateur.

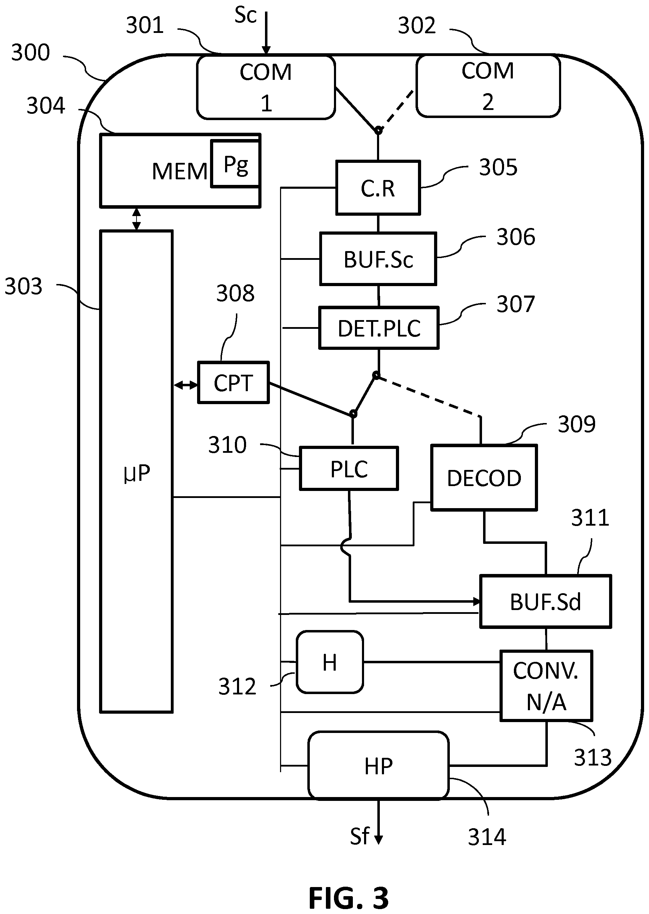

La **figure 3** illustre une structure simplifiée d'un dispositif de basculement 300 apte à mettre en oeuvre le procédé de basculement décrit ci-dessus en référence à la figure 2. Ce dispositif de basculement est par exemple un téléphone, téléphone Intelligent, une tablette, un objet connecté ou tout terminal de communication.

On notera que l'invention qui est décrite ici peut être mise en œuvre au moyen de composants logiciels et/ou matériels. Dans cette optique, les termes « module » ou « entité » utilisés dans ce document peuvent correspondre soit à un composant logiciel, soit à un composant matériel, soit encore à un ensemble de composants matériels et/ou logiciels aptes à mettre en oeuvre la ou les fonctions décrites pour le module ou l'entité concerné(e).

Ce dispositif comporte une unité de traitement 303 équipée d'un ou de plusieurs processeur(s) et pilotée par un programme informatique Pg stocké dans une mémoire 304 et mettant en oeuvre le procédé de basculement tel que décrit en référence à la figure 2.

A l'initialisation, les instructions de code du programme informatique Pg sont par exemple chargées dans une mémoire RAM non représentée et exécutées par un processeur de l'unité de traitement 303. Ce processeur de l'unité de traitement 303 met en oeuvre les étapes du procédé de basculement tel que décrit précédemment et notamment les étapes de détection d'un nombre de commande de mise en oeuvre d'un processus de remplacement d'échantillons manquants lors du décodage audio de la communication en cours et de basculement vers une deuxième Interface de communication lorsque le nombre de commandes dépasse un seuil, selon les instructions du programme Informatique Pg.

Dans l'exemple de réalisation de l'invention considéré, le dispositif 300 comporte une première interface de communication 301 telle qu'une Interface réseau sans fil (COM1) permettant de se connecter et d'échanger des données par l'intermédiaire d'un réseau d'accès de type Wi-Fi. L'interface de communication 301 permet l'établissement de communications avec un autre terminal. Cette Interface de communication peut par exemple être choisie par défaut à l'initialisation de la communication si un point d'accès Wi-Fi est à proximité du dispositif.

Le dispositif 300 comporte également une deuxième Interface de communication 302 comme par exemple une interface réseau cellulaire (COM2) adaptée pour établir des communications au travers d'un réseau d'accès cellulaire de type 2G, 3G ou 4G.

Le dispositif possède également une carte réseau 305 qui permet de sélectionner entre autre l'interface de communication à mettre en oeuvre, à l'initialisation de la communication et aussi pendant une communication et selon le procédé de basculement mis en oeuvre dans le dispositif.

Le dispositif 300 de communication possède une chaine de traitement du signal de parole ou plus généralement du signal audio reçu codé par exemple par l'interface de communication 301. On s'intéresse ici à la partie décodage de ce signal audio reçu et à la chaine de traitement relative. Bien entendu, le dispositif 300, en tant que terminal de communication possède également une chaine de codage du signal audio. Cette chaine de codage n'est pas représentée ici.

Le dispositif 300 comporte un haut-parleur 314 qui représente la fin de la chaine de traitement du signal codé reçu. Pour que l'utilisateur du terminal 300 perçoive une qualité acceptable du signal de communication, le haut-parleur doit diffuser de façon continue un signal de parole naturelle Sf, celle du locuteur distant. S'il y a une rupture dans le flux continu de la voix, l'utilisateur percevra une voix robotique ou faiblement hachée ou bien une perte de mots dans le cas d'une grande rupture.

Le haut-parleur est alimenté de façon continue par le convertisseur numérique/analogique 313 qui est lui-même piloté par une horloge (H) 312 du terminal. C'est cette horloge qui détermine la qualité du flux continu restitué à l'utilisateur, diffusé de façon continue par le haut-parleur. A chaque sollicitation de l'horloge 312, le convertisseur numérique/analogique 313 récupère une donnée numérique dans le module de stockage temporaire 311 (« buffer » en anglais) du signal de parole décodé pour la convertir en signal analogique afin d'être diffusée sur le haut-parleur. Tant qu'il y des données utilisables à récupérer dans le buffer 311, l'utilisateur perçoit le signal en sortie du haut-parleur avec une bonne qualité.

Les données du buffer 311 sont reçues du décodeur audio 309 ou bien du module de remplacement de trame manquante 310.

Le signal codé, c'est-à-dire compressé, reçu par une interface de communication 301 ou 302 est temporairement mémorisé dans le module 306 servant de « buffer » dans le domaine compressé.

En cas de perturbation sur le réseau Wi-Fi (dans le cas où l'interface de communication utilisée est l'interface de réseau Wi-Fi), par exemple lors de la perte de paquets ou bien un retard de paquets, le buffer 306 ne comporte plus de données utilisables en tant voulue. Ceci provoque donc une rupture dans les données audio à décoder et en bout de chaine, dans le flux continu de la parole à restituer au HP.

Pour remédier à ces ruptures potentielles de signal, les terminaux de communications utilisent des mécanismes de remplacement de trames manquantes, effacées ou erronées. Ces mécanismes sont prévus dans les décodeurs audio chargées de décompresser le signal audio codé reçu. Par exemple, les décodeurs de parole normalisé à l'organisme de normalisation 3GPP, de type AMR ou AMR-WB, ou plus récemment de type EVS, utilisent ces mécanismes de remplacement de trames manquantes appelés PLC (pour « Packet Loss Concealment » en anglais). Ce mécanisme permet ainsi de générer de fausses données audio afin de pallier au manque de signal. Ces fausses données audio sont une estimation de ce que pourrait être le vrai signal de parole.

Si ce mécanisme est sollicité plusieurs fois de suite, l'estimation du vrai signal audio est de moins bonne qualité car ce mécanisme possède généralement un effet mémoire dé-génératrice.

Un module de commande 307 de mise en oeuvre du processus de PLC détecte si le module de décodage 309 peut récupérer des données à décompresser dans le module de stockage temporaire 306 ou « buffer » comportant des données compressées, c'est-à-dire du signal audio codé. S'il n'y a pas de données dans ce buffer à cause par exemple de perturbation Wi-Fi, alors le module de commande 307 fait appel au mécanisme de remplacement d'échantillons manquants 310 qui génère les échantillons ou trames manquantes pour alimenter le module de stockage temporaire 311 de données décompressées à la place du décodeur.

Ces données décompressées ou fausse données décompressées alimentent ensuite le convertisseur numérique/analogique 313 qui convertit les données décompressées en un signal à diffuser sur le haut-parleur 314 selon la cadence fixée par l'horloge 312.

Selon l'invention, le dispositif 300 comporte un compteur 308 de demandes de mise en oeuvre du mécanisme de remplacement de trame manquante (PLC).

Ainsi, à chaque fois que le module PLC 310 est sollicité par le module de détection 307, le compteur est incrémenté.

Dans un mode de réalisation particulier, si le nombre de sollicitation successive du module 310 dépasse un seuil, cela veut dire que la qualité du signal à restituer par le haut-parleur est de mauvaise qualité et que l'interface de communication utilisée génère des problèmes, quel que soit le problème. L'unité de traitement 303 commande alors le basculement d'interface de communication à la carte réseau 305 pour passer de la première interface de communication à une deuxième interface de communication.

Comme décrit en référence à la figure 2, ce seuil peut être compris entre 8 et 12, par exemple 10. Bien évidemment ce nombre n'est pas limitatif, il peut être différent selon la tolérance de qualité que l'on souhaite obtenir pour l'utilisateur final.

Si la première interface de communication est une interface réseau Wi-Fi, la deuxième interface peut être la même interface réseau Wi-Fi mais d'une fréquence différente. Elle peut être une autre Interface réseau Wi-Fi, sur un autre point d'accès dans la même zone géographique, de même fréquence ou de fréquence différente. La deuxième interface de communication peut être une interface réseau cellulaire de type circuit, c'est-à-dire 2G ou 3G ou bien une interface réseau cellulaire de type paquet (LTE), c'est-à-dire 4G.

Le basculement peut également se faire dans l'autre sens, c'est-à-dire d'un réseau cellulaire vers un réseau Wi-Fi.

Dans un mode de réalisation possible, le basculement peut également s'effectuer entre une antenne radio (eNode) d'une communication LTE vers une autre antenne radio LTE.

Dans un autre mode de réalisation, ce basculement s'effectue lorsque le nombre de demande de mise en oeuvre du mécanisme de remplacement de trames manquantes dépasse un seuil pour un temps limité.

Par exemple, ce seuil pourrait être fixé à 20 pendant un temps limité d'une seconde.

Bien évidemment, ceci n'est qu'un exemple numérique qui peut varier selon la tolérance que l'utilisateur peut avoir sur la qualité du signal reçu.

Ainsi, le terminal de communication représenté ici en 300 permet de détecter de façon simple, la qualité du signal perçu par l'utilisateur final, c'est-à-dire du signal en sortie du haut-parleur. Cette détection d'appel à la PLC indique qu'une perturbation a eu lieu soit dans le réseau utilisé soit à la réception du signal codé et que le signal codé n'est pas reçu intégralement ce qui peut engendrer une perte de qualité.

Cette détection permet de mesurer la qualité perçue par l'utilisateur final puisqu'elle est effectuée au plus près de l'utilisateur et non pas dans le réseau comme dans les méthodes de l'état de l'art. Elle permet de s'affranchir du problème qui a généré la perturbation du signal. Peut-importe la cause du problème, l'appel à la PLC suffit à indiquer qu'un problème a eu lieu et qu'un changement d'interface de communication peut permettre d'améliorer la qualité du signal reçu.

L'invention s'applique ainsi à tout dispositif de communication utilisant un décodeur audio dans lequel un mécanisme de remplacement de trame ou d'échantillon manquant est prévu. Le dispositif décrit comporte deux interfaces de communication mais il peut en comportant plus de deux. Le basculement peut s'effectuer entre plusieurs interfaces de communication et non pas uniquement entre deux interfaces.

Si la qualité perçue, pas la mesure du nombre d'appel à la PLC, n'est toujours pas suffisante lors d'un premier basculement, un autre basculement peut s'effectuer ou bien un retour vers l'interface de communication initiale peut également s'effectuer.

Un ordre défini de basculement peut être enregistré en mémoire et piloté par l'unité de traitement. Cet ordre défini peut être par exemple celui listé en référence à la figure 2.

Enfin, dans un mode de réalisation particulier, une analyse du taux de remplissage et de récupération des données du buffer 311 est effectuée afin de prévoir par anticipation que le module de PLC va être sollicité. L'analyse peut se baser sur des données statistiques calculées selon un historique de données de caractéristiques du buffer 311 et du nombre d'appel à la PLC. Cette analyse permet de prévoir et de détecter en avance, le nombre de commandes de mise en oeuvre de la PLC et ainsi de basculer d'interface de communication par anticipation.

## Revendications

1. Procédé de basculement d'interface de communication, d'une première interface de communication vers une deuxième interface de communication sur un terminal en cours de communication, **caractérisé en ce qu'**il comporte les étapes suivantes :
- en cas de détection d'un manque de données compressées d'un signal audio, à décoder dans une mémoire de réception de données compressées d'une chaine de traitement de décodage audio, dudit signal audio d'une communication en cours, envoi d'une commande de mise en oeuvre d'un processus de remplacement d'échantillons manquants, ladite chaine de traitement étant interne au terminal;
- détection (E201) d'un nombre de commandes de mise en oeuvre du processus de remplacement d'échantillons manquants lors du décodage audio de la communication en cours ;
- basculement (E203) vers une deuxième interface de communication lorsque le nombre de commandes dépasse un seuil.

2. Procédé selon la revendication 1, **caractérisé en ce que** le seuil est défini par un nombre consécutif maximum de commandes.

3. Procédé selon la revendication 1, **caractérisé en ce que** le seuil est défini par un nombre de commandes maximum pendant un temps restreint.

4. Procédé selon l'une des revendications 1 à 3, **caractérisé en ce que** le basculement s'effectue entre deux interfaces de communication parmi les interfaces de communication de la liste suivante :
- Wi-Fi sur un premier point d'accès Wi-Fi et selon une première fréquence ;
- Wi-Fi sur un premier point d'accès Wi-Fi et selon une deuxième fréquence ;
- Wi-Fi sur un deuxième point d'accès Wi-Fi et selon une première fréquence ;
- Wi-Fi sur un deuxième point d'accès Wi-Fi et selon une deuxième fréquence ;
- 4G sur une première antenne 4G et selon une première fréquence ;
- 4G sur une première antenne 4G et selon une deuxième fréquence
- 4G sur une deuxième antenne 4G et selon une première fréquence ;
- 4G sur une deuxième antenne 4G et selon une deuxième fréquence ;
- 3G
- 2G.

5. Procédé selon l'une des revendications 1 à 4, **caractérisé en ce que** l'étape de détection d'un nombre de commandes s'effectue par prédiction selon une analyse statistique du flux de données décodées, de la communication en cours, d'un espace de stockage temporaire de données décodées du terminal.

6. Procédé selon l'une des revendications 1 à 5, **caractérisé en ce que** le basculement s'effectue selon un ordre prédéfini.

7. Dispositif de communication apte un mettre en oeuvre un basculement d'interface de communication, d'une première interface de communication (301) vers une deuxième interface de communication (302) en cours de communication , le dispositif comprenant ladite première interface de communication (301) et ladite deuxième interface de communication (302) et étant **caractérisé en ce qu'**il comporte :
- un module de commande (307) apte à envoyer une commande de mise en oeuvre d'un processus de remplacement d'échantillons manquants , en cas de détection d'un manque de données compressées d'un signal audio, à décoder dans une mémoire (306) de réception de données compressées d'une chaine de traitement de décodage audio, dudit signal audio d'une communication en cours, ladite chaine de traitement étant interne au dispositif;
- un module de détection (308) d'un nombre de commandes de mise en oeuvre d'un processus de remplacement d'échantillons manquants lors du décodage audio de la communication en cours;
- un module de commande (303, 305) de basculement vers une deuxième interface de communication (302) lorsque le nombre de commandes dépasse un seuil.

8. Terminal de communication **caractérisé en ce qu'**il comporte un dispositif selon la revendication 7.

9. Programme informatique comportant des instructions de code pour la mise en oeuvre des étapes du procédé de basculement selon l'une des revendications 1 à 6, lorsque ces instructions sont exécutées par un processeur d'un dispositif selon la revendication 7.

10. Support de stockage lisible par un processeur d'un dispositif selon la revendication 7, support sur lequel est enregistré un programme informatique comprenant des instructions qui, lorsque celles-ci sont exécutées par le processeur, permettent au dispositif d'exécuter les étapes du procédé de basculement selon l'une des revendications 1 à 6.

## Patentansprüche

1. Verfahren zur Umschaltung einer Kommunikationsschnittstelle von einer ersten Kommunikationsschnittstelle zu einer zweiten Kommunikationsschnittstelle an einem in Kommunikation befindlichen Endgerät, **dadurch gekennzeichnet, dass** es die folgenden Schritte umfasst:
- im Fall einer Detektion eines Mangels an komprimierten Daten eines Audiosignals, das in einem Speicher für den Empfang von komprimierten Daten einer Verarbeitungskette zur Audiodecodierung des Audiosignals einer laufenden Kommunikation decodiert werden soll, Senden eines Befehls zur Durchführung eines Prozesses zum Ersetzen fehlender Abtastwerte, wobei sich die Verarbeitungskette in dem Endgerät befindet;
- Detektieren (E201) einer Anzahl von Befehlen zur Durchführung des Prozesses zum Ersetzen fehlender Abtastwerte während der Audiodecodierung der laufenden Kommunikation;
- Umschalten (E203) zu einer zweiten Kommunikationsschnittstelle, wenn die Anzahl von Befehlen einen Schwellenwert überschreitet.

2. Verfahren nach Anspruch 1, **dadurch gekennzeichnet, dass** der Schwellenwert durch eine maximale fortlaufende Anzahl von Befehlen definiert ist.

3. Verfahren nach Anspruch 1, **dadurch gekennzeichnet, dass** der Schwellenwert durch eine maximale Anzahl von Befehlen während eines begrenzten Zeitraums definiert ist.

4. Verfahren nach einem der Ansprüche 1 bis 3, **dadurch gekennzeichnet, dass** die Umschaltung zwischen zwei Kommunikationsschnittstellen innerhalb der Kommunikationsschnittstellen der folgenden Liste erfolgt:
- Wi-Fi an einem ersten Wi-Fi-Zugangspunkt und mit einer ersten Frequenz;
- Wi-Fi an einem ersten Wi-Fi-Zugangspunkt und mit einer zweiten Frequenz;
- Wi-Fi an einem zweiten Wi-Fi-Zugangspunkt und mit einer ersten Frequenz;
- Wi-Fi an einem zweiten Wi-Fi-Zugangspunkt und mit einer zweiten Frequenz;
- 4G an einer ersten 4G-Antenne und mit einer ersten Frequenz;
- 4G an einer ersten 4G-Antenne und mit einer zweiten Frequenz;
- 4G an einer zweiten 4G-Antenne und mit einer ersten Frequenz;
- 4G an einer zweiten 4G-Antenne und mit einer zweiten Frequenz;
- 3G;
- 2G.

5. Verfahren nach einem der Ansprüche 1 bis 4, **dadurch gekennzeichnet, dass** der Schritt des Detektierens einer Anzahl von Befehlen anhand einer Vorhersage gemäß einer statistischen Analyse des Flusses decodierter Daten, der laufenden Kommunikation, eines temporären Speicherungsplatzes für decodierte Daten des Endgeräts erfolgt.

6. Verfahren nach einem der Ansprüche 1 bis 5, **dadurch gekennzeichnet, dass** die Umschaltung gemäß einer vordefinierten Reihenfolge erfolgt.

7. Kommunikationsvorrichtung, die dazu fähig ist, eine Umschaltung einer Kommunikationsschnittstelle von einer ersten Kommunikationsschnittstelle (301) zu einer zweiten Kommunikationsschnittstelle (302) während einer laufenden Kommunikation durchzuführen, wobei die Vorrichtung die erste Kommunikationsschnittstelle (301) und die zweite Kommunikationsschnittstelle (302) beinhaltet und **dadurch gekennzeichnet ist, dass** sie Folgendes umfasst:
- ein Steuermodul (307), das dazu fähig ist, einen Befehl zur Durchführung eines Prozesses zum Ersetzen fehlender Abtastwerte zu senden, im Fall einer Detektion eines Mangels an komprimierten Daten eines Audiosignals, das in einem Speicher (306) für den Empfang komprimierter Daten einer Verarbeitungskette zur Audiodecodierung des Audiosignals einer laufenden Kommunikation decodiert werden soll, wobei sich die Verarbeitungskette in der Vorrichtung befindet;
- ein Modul zur Detektion (308) einer Anzahl von Befehlen zur Durchführung eines Prozesses zum Ersetzen fehlender Abtastwerte während der Audiodecodierung der laufenden Kommunikation;
- ein Steuermodul (303, 305) für die Umschaltung zu einer zweiten Kommunikationsschnittstelle (302), wenn die Anzahl von Befehlen einen Schwellenwert überschreitet.

8. Kommunikationsendgerät, **dadurch gekennzeichnet, dass** es eine Vorrichtung nach Anspruch 7 umfasst.

9. Computerprogramm, das Codeanweisungen zur Durchführung der Schritte des Verfahrens zur Umschaltung nach einem der Ansprüche 1 bis 6 umfasst, wenn diese Anweisungen von einem Prozessor einer Vorrichtung nach Anspruch 7 ausgeführt werden.

10. Speicherungsmedium, das von einem Prozessor einer Vorrichtung nach Anspruch 7 gelesen werden kann, wobei auf dem Medium ein Computerprogramm aufgezeichnet ist, das Anweisungen beinhaltet, die, wenn sie von dem Prozessor ausgeführt werden, es der Vorrichtung ermöglichen, die Schritte des Verfahrens zur Umschaltung nach einem der Ansprüche 1 bis 6 auszuführen.

## Claims

1. Method for switching over communication interface, from a first communication interface to a second communication interface on a terminal that is currently communicating, **characterized in that** it includes the following steps:
- in the event of detecting a lack of compressed data in an audio signal, to be decoded in a memory for receiving compressed data of an audio decoding processing chain, from said audio signal of an ongoing communication, sending a command to implement a process of replacing missing samples, said processing chain being internal to the terminal;
- detecting (E201) a number of commands to implement the process of replacing missing samples during the audio decoding of the ongoing communication;
- switching over (E203) to a second communication interface when the number of commands exceeds a threshold.

2. Method according to Claim 1, **characterized in that** the threshold is defined by a maximum consecutive number of commands.

3. Method according to Claim 1, **characterized in that** the threshold is defined by a maximum number of commands in a limited time.

4. Method according to one of Claims 1 to 3, **characterized in that** the switchover is performed between two communication interfaces from among the communication interfaces in the following list:
- Wi-Fi on a first Wi-Fi access point and at a first frequency;
- Wi-Fi on a first Wi-Fi access point and at a second frequency;
- Wi-Fi on a second Wi-Fi access point and at a first frequency;
- Wi-Fi on a second Wi-Fi access point and at a second frequency;
- 4G on a first 4G antenna and at a first frequency;
- 4G on a first 4G antenna and at a second frequency;
- 4G on a second 4G antenna and at a first frequency;
- 4G on a second 4G antenna and at a second frequency;
- 3G;
- 2G.

5. Method according to one of Claims 1 to 4, **characterized in that** the step of detecting a number of commands is performed predictively using statistical analysis of the decoded data flow, of the ongoing communication, from a space for the temporary storage of decoded data of the terminal.

6. Method according to one of Claims 1 to 5, **characterized in that** the switchover is performed in a predefined order.

7. Communication device able to implement a communication interface switchover from a first communication interface (301) to a second communication interface (302) that is currently communicating, the device comprising said first communication interface (301) and said second communication interface (302) and being **characterized in that** it includes:
- a control module (307) able to send a command to implement a process of replacing missing samples, in the event of detecting a lack of compressed data in an audio signal, to be decoded in a memory (306) for receiving compressed data of an audio decoding processing chain, from said audio signal of an ongoing communication, said processing chain being internal to the device,
- a module (308) for detecting a number of commands to implement a process of replacing missing samples during the audio decoding of the ongoing communication;
- a control module (303, 305) for switching over to a second communication interface (302) when the number of commands exceeds a threshold.

8. Communication terminal, **characterized in that** it includes a device according to Claim 7.

9. Computer program including code instructions for implementing the steps of the switchover method according to one of Claims 1 to 6 when these instructions are executed by a processor of a device according to Claim 7.

10. Storage medium able to be read by a processor of a device according to Claim 7 and on which there is recorded a computer program comprising instructions that, when they are executed by the processor, allow the device to execute the steps of the switchover method according to one of Claims 1 to 6.
